# EUROPÄISCHE PATENTSCHRIFT

(11) **EP 3 412 131 B1**
(45) Veröffentlichungstag und Bekanntmachung des Hinweises auf die Patenterteilung: **11.11.2020**
(21) Anmeldenummer: 17400031.5
(22) Anmeldetag: 09.06.2017
(51) Int. Cl.: A01D 34/00, G05D 1/02

(54) **BODENBEARBEITUNGSSYSTEM MIT SIGNALANPASSUNG**
FLOOR PROCESSING SYSTEM WITH SIGNAL MATCHING
SYSTÈME DE TRAITEMENT DE SOL COMPRENANT UNE ADAPTATION DE SIGNAL

(43) Veröffentlichungstag der Anmeldung: 12.12.2018
(73) Patentinhaber: Andreas Stihl AG & Co. KG, 71336 Waiblingen (DE)
(72) Erfinder: Ritzer, Peter, 6341 Ebbs (AT); Matt, Sebastian, 6330 Kufstein (AT); Zöttl, Samuel, 6092 Birgitz (AT)
(74) Vertreter: Wasmuth, Rolf

(56) Entgegenhaltungen:
- EP-A1- 1 906 205
- EP-A1- 2 667 271
- WO-A1-2014/158060
- WO-A1-2018/060966

## Beschreibung

Die Erfindung betrifft ein Bodenbearbeitungssystem aus mindestens einem selbstfahrenden Bodenbearbeitungsgerät, das einen Antrieb und eine Steuereinheit aufweist. Es ist ein durch einen Randbegrenzungsdraht begrenzter Arbeitsbereich vorgesehen, wobei das Bodenbearbeitungsgerät eingerichtet ist, in dem Arbeitsbereich einen durch die Steuereinheit bestimmten Fahrweg abzufahren. Es ist eine Basisstation mit einer an den elektrischen Randbegrenzungsdraht angeschlossenen Sendeeinheit vorgesehen, über die ein Drahtsignal auf dem Randbegrenzungsdraht gesendet wird. Das elektromagnetische Feld des Drahtsignals wird in einer Empfangsspule des Bodenbearbeitungsgerätes ein Empfangssignal induzieren, welches in der Steuereinheit zur Bestimmung des Fahrwegs und des Fahrverhaltens verarbeitet wird.

Ein derartiges Bodenbearbeitungssystem ist aus der EP 2 667 271 A1 und der WO 2014/158060 A1 bekannt.

Die Begrenzung des Arbeitsbereichs für ein Bodenbearbeitungsgerät durch einen körperlichen verlegten Draht hat sich in der Praxis bewährt. Immer größer werdende Arbeitsbereiche werden funktionssicher durch eine derartige Randbegrenzung festgelegt, wobei auch unterschiedlich ausgebildete Arbeitsbereiche durch Fahrgassen verbunden sein können. In einem derartigen von einem Draht umschlossenen Gesamtarbeitsbereich kann nicht nur ein einzelnes Bodenbearbeitungsgerät eingesetzt werden, sondern auch mehrere Bodenbearbeitungsgeräte. Vorteilhaft wird bei mehreren Bodenbearbeitungsgeräten bei gleichem Arbeitsergebnis die Gesamtbetriebszeit des Bodenbearbeitungssystems reduziert.

Jeder körperlich als Randbegrenzung verlegte Draht hat zunächst ohm'sche Eigenschaften und in Abhängigkeit von der verlegten Form und den verlegten Fahrgassen auch induktive oder kapazitive Eigenschaften. Daher wird ein auf den Draht aufgegebenes Drahtsignal über die Gesamtlänge des Drahtes gedämpft. Das Drahtsignal ändert sich in Amplitude und Signalform aufgrund der geometrischen und elektrischen Eigenschaften des Drahtes. Daher kann eine ordnungsgemäße Steuerung der Bodenbearbeitungsgeräte insbesondere bei einem größeren Abstand zum Draht beeinträchtigt sein.

Bei einem Betrieb eines Bodenbearbeitungssystems sind ferner gesetzliche Anforderungen zu erfüllen. So dürfen die gesendeten Drahtsignale nicht beliebig stark sein, da deren elektromagnetisches Feld andere, z. B. benachbarte Bodenbearbeitungssysteme in ihrer Funktion beeinträchtigen würden. Wird das Drahtsignal hingegen elektrisch zu schwach ausgelegt, können im Umfeld des Bodenbearbeitungsgerätes auftretende Störsignale die Funktionssicherheit des Betriebs der Bodenbearbeitungsgeräte beeinträchtigen.

Die WO 2018/060966 A1 offenbart ein Bodenbearbeitungssystem mit einem selbstfahrenden Rasenmäher, der innerhalb einer Drahtschleife arbeitet. Vor Inbetriebnahme des Rasenmähers werden in einem Kalibriermodus Testsignale von einem Signalgenerator gesendet und von einem Empfänger empfangen. Die gesendeten und die empfangenen Signale werden mit einem auf der Drahtschleife gewünschten Signal verglichen und zum Betrieb eine Signalform gewählt, die vorteilhaft ist. Danach wird der Rasenmäher in Betrieb genommen.

Der Erfindung liegt die Aufgabe zugrunde, ein Bodenbearbeitungssystem mit einem Draht als Randbegrenzung eines Arbeitsbereiches derart auszubilden, dass einerseits über die gesamte Länge des Drahtes einer Randbegrenzung ein für die fehlerfreie Funktion der Bodenbearbeitungsgeräte ausreichend starkes Drahtsignal anliegt und andererseits eine elektromagnetische Beeinträchtigung des Umfeldes minimiert ist.

Die Aufgabe wird nach den Merkmalen des Anspruchs 1 gelöst.

Die Basisstation weist eine Empfangseinheit auf, in der das auf dem Draht der Randbegrenzung gesendete Drahtsignal insbesondere parallel zur Sendeeinheit elektrisch empfangen wird. Dieses empfangene Drahtsignal wird einer Signalaufbereitungsvorrichtung übermittelt und mit einem vorgegebenen Sollsignal verglichen. Bei einer Abweichung des empfangenen Drahtsignals von dem vorgegebenen Sollsignal wird das gesendete Drahtsignal verändert. Dabei bilden die Empfangseinheit der Basisstation, die Signalaufbereitungsvorrichtung der Basisstation und die Sendeeinheit der Basisstation zusammen mit dem in Form einer geschlossenen Drahtschleife an die Basisstation angeschlossenen Draht einen Regelkreis.

In besonderer Ausbildung der Erfindung wird das empfangene Drahtsignal derart verändert, dass es dem vorgegebenen Sollsignal angenähert ist oder diesem insbesondere entspricht.

Hervorzuheben ist, dass die Empfangseinheit das gesendete Drahtsignal zeitgleich mit dem Senden über die Sendeeinheit elektrisch vom Draht abgreift, so dass das gesendete Drahtsignal zeitgleich in der Empfangseinheit gemessen wird. Empfangseinheit und Sendeeinheit sind in derselben Basisstation vorgesehen und arbeiten unabhängig von der Länge des Drahtes und der verlegten geometrischen Form des Drahtes. Es sind vom Benutzer keine Eingaben zur verlegten Randbegrenzung, zur Länge des verlegten Drahtes oder zum Abstand von parallel verlaufenden Drahtabschnitten einzugeben. Auch kann auf Sensoren z. B. zur Erfassung des elektromagnetischen Feldes verzichtet werden. Die Basisstation passt das gesendete Drahtsignal ohne Eingriffe durch den Benutzer über den Regelkreis selbstständig optimal an.

Durch die Signalanpassung des gesendeten Drahtsignals kann die Dämpfung des Drahtsignals, insbesondere die ohmschen, induktiven und/oder kapazitiven Einflussfaktoren des als Randbegrenzung verlegten Drahtes in hohem Maße kompensiert werden. So kann über die Signalaufbereitungsvorrichtung das zu sendende Drahtsignal in seiner Amplitude, seiner Signalform und/oder in seinem zeitlichen Verlauf angepasst werden.

Das vorgegebene Sollsignal muss nicht zwingend dem gesendeten Drahtsignal entsprechen. Vielmehr können sich das gesendete Drahtsignal und das vorgegebene Sollsignal in der Amplitude und/oder der Signalform unterscheiden. Auch kann es zweckmäßig sein, der Signalaufbereitungsvorrichtung eine Auswahl von zulässigen Sollsignalen zur Verfügung zu stellen. Die Signalaufbereitungsvorrichtung kann in Abhängigkeit der festgestellten Abweichungen des empfangenen Drahtsignals von einem vorgegebenen Sollsignal entscheiden, welche Signalform, Signalstärke und Signalzeit für die angeschlossene Drahtschleife vorteilhaft ist. So kann - ohne dass ein Benutzer eingreifen muss - jeder vor Ort in beliebiger Form verlegte Draht als Randbegrenzung mit einem optimalen Drahtsignal betrieben werden, wodurch eine ausfallsichere Steuerung der Bodenbearbeitungsgeräte im gesamten Arbeitsbereich gewährleistet ist.

Körperlich ist der Draht der Randbegrenzung eine Drahtschleife, die an ihren Anschlussenden mit einer Sendeeinheit elektrisch verbunden ist. Zweckmäßig ist die Empfangseinheit elektrisch parallel zur Sendeeinheit an den Draht der Randbegrenzung angeschlossen. In einfacher Weise sind die Anschlussenden der Drahtschleife mit der Empfangseinheit elektrisch verbunden. Die Sendeeinheit und die Empfangseinheit kommunizieren in Weiterbildung der Erfindung über eine Signalaufbereitungsvorrichtung miteinander.

Die Signalaufbereitungsvorrichtung bestimmt in Abhängigkeit der festgestellten Abweichungen zwischen dem empfangenen Drahtsignal und dem vorgegebenen Sollsignal, ob das zu sendende Drahtsignal zu verändern ist, z.B. in seiner Amplitude zu verstärken ist, in seiner Signalform zu verändern ist oder in seinem zeitlichen Verlauf wie z. B. in der Frequenz anzupassen ist.

In vorteilhafter Weiterbildung der Erfindung ist die Basisstation zugleich als Ladestation für einen Akku des Bodenbearbeitungsgerätes ausgebildet. Hierzu fährt das Bodenbearbeitungsgerät bei entsprechend niedrigem Ladezustand des bordeigenen Akkus in die Basisstation als Ladestation ein.

Vorteilhaft ist das Bodenbearbeitungsgerät ein selbstfahrender Rasenmäher.

Die weiteren Merkmale der Erfindung ergeben sich aus den weiteren Ansprüchen, der Beschreibung und der Zeichnung, in der ein nachstehend im Einzelnen beschriebenes Ausführungsbeispiel der Erfindung dargestellt ist. Es zeigen:
- Fig. 1: in schematischer Darstellung ein Bodenbearbeitungssystem aus mehreren, in einem Arbeitsbereich selbstfahrenden Bodenbearbeitungsgeräten,
- Fig. 2: in schematischer Darstellung den Aufbau eines Bodenbearbeitungsgerätes am Beispiel eines selbstfahrenden Rasenmähers,
- Fig. 3: in schematischer Darstellung einen Regelkreis zur Anpassung eines auf einen Draht einer Randbegrenzung gesendeten Drahtsignals.

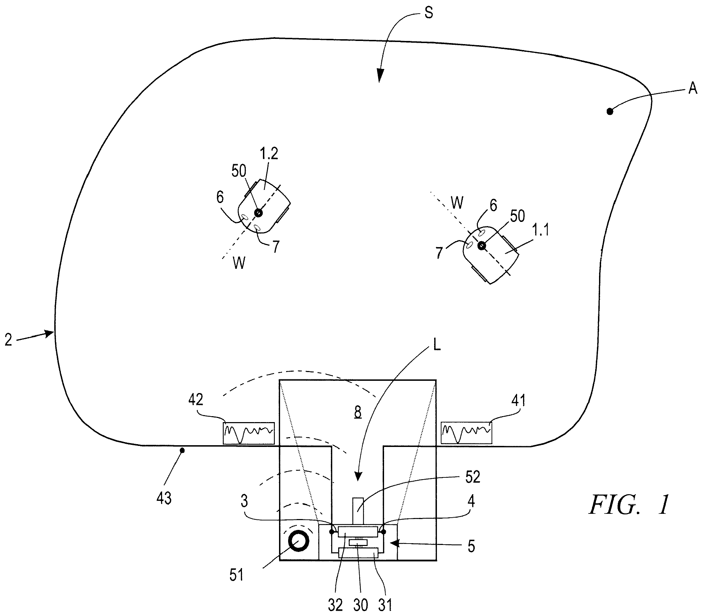

Das in Fig. 1 dargestellte Bodenbearbeitungssystem S umfasst zumindest ein selbstfahrendes Bodenbearbeitungsgerät 1.1, 1.2 zur Bearbeitung eines vorgegebenen Arbeitsbereichs A. Im gezeigten Ausführungsbeispiel sind zwei Bodenbearbeitungsgeräte 1.1 und 1.2 zur gemeinsamen Bearbeitung des Arbeitsbereiches A vorgesehen. Das Bodenbearbeitungssystem S kann weniger oder auch mehr Bodenbearbeitungsgeräte umfassen. Jedes einzelne Bodenbearbeitungsgerät 1.1, 1.2 arbeitet autonom und fährt innerhalb des Arbeitsbereiches A selbstständig einen zufälligen, vorgegebenen oder selbstständig geplanten Fahrweg W ab.

Im gezeigten Ausführungsbeispiel nach Fig. 1 ist der Arbeitsbereich A des Bodenbearbeitungssystems S durch einen Draht 43 begrenzt. Der Draht 43 bildet eine Randbegrenzung des Arbeitsbereichs A und ist insbesondere als geschlossene Drahtschleife 2 verlegt. Die Anschlussenden 3 und 4 der Drahtschleife 2 sind an eine Sende-/Empfangseinheit 5 einer Basisstation 8 angeschlossen. Wie Fig. 1 zeigt, sind Anschlussenden 3 und 4 des Drahtes 43 mit einer Sendeeinheit 32 verbunden. Über die Sendeeinheit 32 werden-bevorzugt in zeitlich festen Abständen-elektrische Drahtsignale 41 auf dem Draht 43 der Randbegrenzung gesendet.

Insbesondere elektrisch parallel zur Sendeeinheit 32 sind die Anschlussenden 3 und 4 des Drahtes 43 der Drahtschleife 2 mit einer Empfangseinheit 31 verbunden, welche das auf den Draht 43 der Randbegrenzung gesendete Drahtsignal 41 elektrisch empfängt. Die Empfangseinheit 31 und die Sendeeinheit 32 sind über eine Signalaufbereitungsvorrichtung 30 miteinander verbunden.

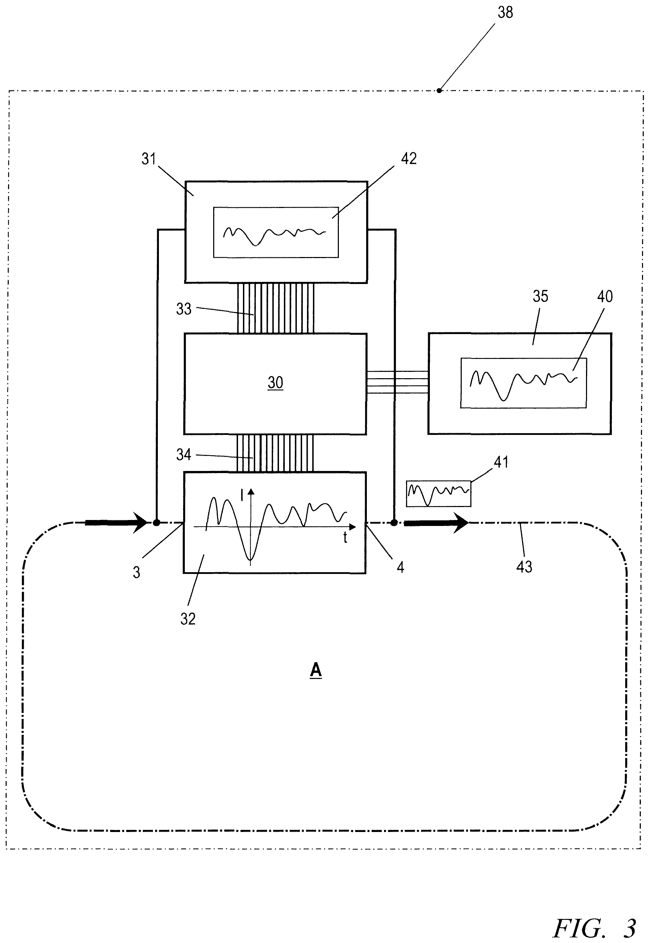

Die Empfangseinheit 31, die Signalaufbereitungsvorrichtung 30 und die Sendeeinheit 32 bilden zusammen mit dem Draht der geschlossenen Drahtschleife 2 einen Regelkreis 38 (Fig. 3). Die Funktion des Regelkreises 38 wird nachfolgend im Einzelnen beschrieben.

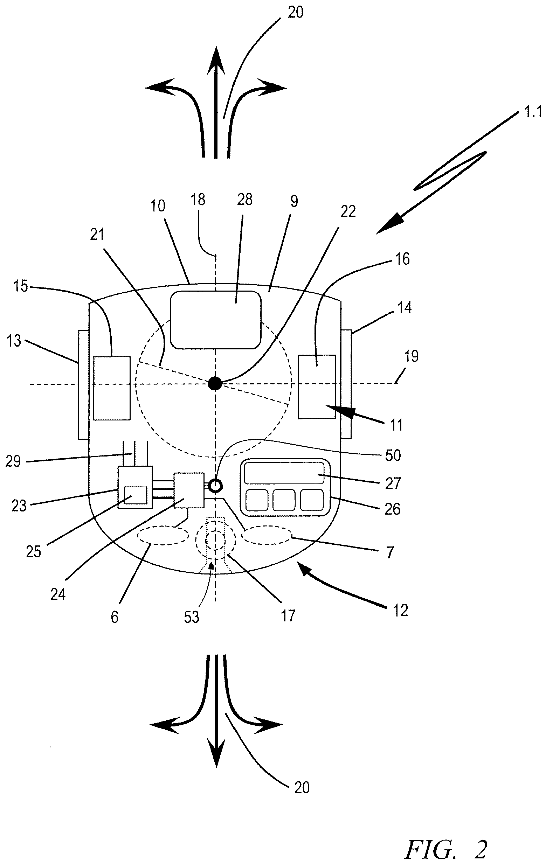

In Fig. 2 ist in Draufsicht schematisch ein Bodenbearbeitungsgerät 1.1 gezeigt, welches als Rasenmäher 10 ausgebildet ist. Die Darstellung des autonom arbeitenden, selbstfahrenden Rasenmähers 10 ist beispielhaft. Das Bodenbearbeitungsgerät 1.1 kann auch als Vertikutierer, Kehrmaschine, Staubsauger, autonom fahrender Aufsitzmäher oder dergleichen Bodenbearbeitungsgerät ausgebildet sein.

Der beispielhaft gezeigte Rasenmäher 10 besteht im Wesentlichen aus einem Fahrwerk mit hinteren Antriebsrädern 13 und 14 und einem Antrieb 11. Im gezeigten Ausführungsbeispiel ist jedem Antriebsrad 13, 14 ein elektrischer Antriebsmotor 15, 16 zugeordnet, so dass die Antriebsräder 13 und 14 zur Richtungssteuerung des Rasenmähers 10 mit unterschiedlicher Drehzahl und/oder in unterschiedlicher Drehrichtung angetrieben werden können. Der Antrieb 11 besteht aus zwei unabhängig voneinander ansteuerbaren Elektromotoren.

Im vorderen Bereich 12 des Gehäuses 9 des Bodenbearbeitungsgerätes 1.1 ist ein insbesondere selbstlenkendes drittes Rad 17 vorgesehen. Das dritte Rad 17 liegt vorzugsweise auf einer Längsmittelachse 18 des Gehäuses 9 des Rasenmähers 10. Die Ausbildung eines Fahrgestells mit vier Rädern kann zweckmäßig sein.

Die Antriebsräder 13, 14 des gezeigten Bodenbearbeitungsgerätes 1.1 drehen um eine gemeinsame Antriebsachse 19. Die Antriebsachse 19 liegt - in Draufsicht auf den Rasenmäher 10 nach Fig. 2 - insbesondere rechtwinklig zur Längsmittelachse 18 des Gehäuses 9. Für eine Geradeausfahrt sind die Antriebsräder 13 und 14 über ihre elektrischen Antriebsmotoren 15 und 16 synchron anzutreiben. Für eine Kurvenfahrt werden die Antriebsräder 13, 14 durch ihre Antriebsmotoren 15, 16 mit zum Beispiel unterschiedlichen Drehzahlen angetrieben. Durch den Antrieb 11 ist das Bodenbearbeitungsgerät 1.1 in jeder gewünschten Fahrtrichtung 20 gemäß den dargestellten Pfeilen vorwärts oder rückwärts zu bewegen.

Im Ausführungsbeispiel als Rasenmäher 10 weist das Bodenbearbeitungsgerät 1.1 nach Fig. 2 zwischen den Antriebsrädern 13 und 14 ein Arbeitswerkzeug 21 auf. Bei einem Rasenmäher 10 ist das Arbeitswerkzeug 21 ein um eine senkrechte Drehachse 22 rotierendes Schneidmesser.

Die Steuerung der elektrischen Antriebsmotoren 15 und 16 erfolgt über eine Steuereinheit 23, die über schematisch angedeutete elektrische Leitungen 29 mit den elektrischen Antriebsmotoren 15 und 16 verbunden ist.

Das auf dem Draht 43 der Drahtschleife 2 der Randbegrenzung gesendete Drahtsignal 41 wird in Empfangsspulen 6 und 7 des Bodenbearbeitungsgerätes 1.1 empfangen. Die Empfangsspulen 6 und 7 liegen im vorderen Bereich 12 des Gehäuses 9 jeweils auf einer Seite der Längsmittelachse 18 des Bodenbearbeitungsgerätes 1.1. Die aufgrund der gesendeten Drahtsignale 41 in den Empfangsspulen 6 und 7 induzierten Empfangssignale werden einer gemeinsamen Auswerteeinheit 24 zugeführt, die mit der Steuereinheit 23 verbunden ist. Vorteilhaft umfasst die Steuereinheit 23 ferner einen Speicher 25 für eine Betriebsvariable, die zum Betrieb des Bodenbearbeitungsgerätes 1.1 zweckmäßig ist. Eine derartige Betriebsvariable kann zum Beispiel die Startzeit des Betriebs sein, die Dauer des Betriebs, die Schnitthöhe (bei einer Ausbildung als Rasenmäher), der Fahrweg zu einer Ladestation, ein Mähplan als Wochenplan oder dergleichen Betriebsvariable.

In Fig. 2 ist zur Eingabe von Informationen zur Betriebsvariablen durch den Benutzer ein Eingabefeld 26 dargestellt, welches vorteilhaft einen Bildschirm 27 und Eingabetasten aufweist. Es kann zweckmäßig sein, den Bildschirm als Touchscreen auszubilden, so dass Eingabetasten entfallen können.

Jedes Bodenbearbeitungsgerät 1.1, 1.2 kann ferner einen weiteren Empfänger 50 aufweisen, der Funksignale oder Infrarotsignale eines Stationssender 51 empfängt. Ein derartiger Stationssender 51 kann zum Beispiel an der Basisstation 8 des Bodenbearbeitungssystems S vorgesehen sein, wie in Fig. 1 dargestellt. Der Stationssender 51 sendet Signale an den Empfänger 50 des Bodenbearbeitungsgerätes 1.1. Diese drahtlose Kommunikationsverbindung zwischen dem Stationssender 51 und dem Empfänger 50 auf dem Bodenbearbeitungsgerät 1.1 ist vorteilhaft als Funkstrecke oder dergleichen ausgebildet. Mögliche Funkstrecken können WLAN-Verbindungen, Bluetooth-Verbindungen, GSM-Verbindungen, NFC-Verbindungen oder dergleichen drahtlose Verbindungen sein. In besonderer Ausgestaltung der Erfindung ist der Stationssender und der Empfänger derart ausgebildet, dass in beiden Richtungen ein Senden und ein Empfangen von Daten möglich ist.

Die elektrische Versorgung der Steuereinheit 23 und all ihrer Komponenten, die elektrische Versorgung des elektrischen Antriebs 11 sowie die elektrische Versorgung des Empfängers 50 wird durch einen bordeignen Akku 28 des Bodenbearbeitungsgerätes 1.1 gewährleistet. Der Akku 28 ist bevorzugt in das Gehäuse 9 des Bodenbearbeitungsgerätes 1.1 eingeschoben.

Im Betrieb des Bodenbearbeitungssystems S werden die Bodenbearbeitungsgeräte 1.1 und 1.2 voneinander unabhängig in dem zu bearbeitenden Arbeitsbereich A durch entsprechende Ansteuerung der Antriebsmotoren 15 und 16 verfahren. Jedes einzelne Bodenbearbeitungsgerät 1.1 und 1.2 arbeitet autonom entsprechend der Information einer in seinem Speicher 25 abgelegten Betriebsvariablen.

Da im Betrieb eines Bodenbearbeitungsgerätes 1.1, 1.2 die Akkuladung aufgrund der betriebenen elektrischen Verbraucher abnimmt, ist zweckmäßig vorgesehen, die Basisstation 8 des Bodenbearbeitungssystems S zugleich als Ladestation L auszubilden, wie in Fig. 1 angedeutet ist. So kann ein Kupplungsfinger 52 vorgesehen sein, der in eine entsprechende Kupplungsbuchse 53 des Bodenbearbeitungsgerätes 1.1 einfährt und eine elektrische Verbindung zur Aufladung des bordeignen Akkus 28 herstellt.

Um zu gewährleisten, dass über die gesamte Länge des Drahtes 43 der Randbegrenzung ein ausreichend starkes Drahtsignal 41 anliegt, wird das von der Sendeeinheit 32 gesendete Drahtsignal 41 über die Verbindung mit den Anschlussenden 3 und 4 elektrisch in der Empfangseinheit 31 empfangen. Das auf dem Draht 43 gesendete Drahtsignal 41 ändert sich in Amplitude und Signalform aufgrund der geometrischen und elektrischen Eigenschaften des Drahtes 43. Sowohl der ohm'sche Widerstand des Drahtes 43 als auch induktive und kapazitive Eigenschaften einer verlegten Drahtschleife 2 beeinflussen das Drahtsignal 41. Ferner können Signalverfälschungen durch Störsignale auftreten.

Für einen ordnungsgemäßen Betrieb des Bodenbearbeitungssystems S ist zu gewährleisten, dass das gesendete Drahtsignal 41 von den Bodenbearbeitungsgeräten 1.1, 1.2 über die gesamte Länge des Drahtes 43 der Randbegrenzung auch mit Abstand zum Draht 43 sicher zu empfangen ist. Das empfangene Drahtsignal 42 soll trotz Leitungsverlusten auf der Drahtschleife 2 eine Amplitude und/oder Signalform haben, die eine fehlerfreie Steuerung der Bodenbearbeitungsgeräte 1.1 und 1.2 im gesamten Arbeitsbereich sicherstellt.

Nach der Erfindung ist vorgesehen, das in der Empfangseinheit 31 empfangene Drahtsignal 42 über eine elektrische Leitungsverbindung 33 einer Signalaufbereitungsvorrichtung 30 zu übermitteln. Die Signalaufbereitungsvorrichtung 30 vergleicht das empfangene Drahtsignal 42 mit einem vorgegebenen Sollsignal 40, welches der Signalaufbereitungsvorrichtung 30 zweckmäßig über einen Speicher 35 zur Verfügung gestellt ist. Das vorgegebene Sollsignal 40 kann ein Signal sein, welches gesetzlichen Anforderungen genügt und auf dem Draht 43 der Randbegrenzung grundsätzlich zulässig ist. Stellt die Signalaufbereitungsvorrichtung 30 Abweichungen zum vorgegebenen Sollsignal 40 fest, werden über eine Leitungsverbindung 34 zur Sendeeinheit 32 Steuerungsbefehle weitergegeben, durch die das zu sendende Drahtsignal 41 in seiner Amplitude I, seiner Frequenz, seiner Signalform oder dergleichen Signalvariablen verändert wird. Das gesendete Drahtsignal 41 wird entsprechend den Steuerungsbefehlen modifiziert und auf der Drahtschleife 2 gesendet.

Das gesendete Drahtsignal 41 wird in der Empfangseinheit 31 von den Anschlussenden 3, 4 der Drahtschleife 2 elektrisch abgegriffen und erneut empfangen. Über die Leitungsverbindung 33 wird das empfangene Drahtsignal 42 der Signalaufbereitungsvorrichtung 30 zur Verfügung gestellt und von dieser mit dem vorgegebenen Sollsignal 40 verglichen. Werden weiterhin Abweichungen von dem Sollsignal 40 festgestellt, werden erneut Variable des Signals (Amplitude, Signalform, Zeitverlauf) geändert und das so modifizierte Drahtsignal 41 erneut über die Anschlussenden 3, 4 des Drahtes 43 der Drahtschleife 2 gesendet. Die Sendeeinheit 32, der Draht 43 der Drahtschleife 2, die Empfangseinheit 31 und die Signalaufbereitungsvorrichtung 30 bilden einen Regelkreis, insbesondere einen geschlossenen Regelkreis. Die Anpassung des gesendeten Drahtsignals 41 erfolgt so lange, bis das empfange Drahtsignal 42 dem vorgegebenen Sollsignal 40 angenähert ist, vorzugsweise dem Sollsignal 40 entspricht. Hervorzuheben ist, dass das gesendete Drahtsignal 41 und das vorgegebene Sollsignal 40 in der Amplitude I und/oder der Signalform unterschiedlich ausgebildet sein können.

## Patentansprüche

1. Bodenbearbeitungssystem aus mindestens einem selbstfahrenden Bodenbearbeitungsgerät (1.1, 1.2), wobei das Bodenbearbeitungsgerät (1.1, 1.2) einen Antrieb (11) und eine Steuereinheit (23) aufweist, und mit einem durch einen Draht (43) begrenzten Arbeitsbereich (A), wobei das Bodenbearbeitungsgerät (1.1, 1.2) eingerichtet ist, in dem Arbeitsbereich (A) einen durch die Steuereinheit (23) bestimmten Fahrweg (W) abzufahren, und mit einer Basisstation (8) mit einer elektrisch an den Draht (43) angeschlossenen Sendeeinheit (32), die eingerichtet ist, ein Drahtsignal (41) auf dem Draht (43) zu senden, wobei das elektromagnetische Feld des Drahtsignals (41) in einer Empfangsspule (6, 7) des Bodenbearbeitungsgerätes (1.1, 1.2) ein Empfangssignal induziert, und die Steuereinheit (23) eingerichtet ist, das induzierte Empfangssignal in der Steuereinheit (23) zu verarbeiten,
**dadurch gekennzeichnet, dass** die Basisstation (8) eine Empfangseinheit (31) aufweist und die Empfangseinheit (31) der Basisstation (8) eingerichtet ist, das auf dem Draht (43) gesendete Drahtsignal (41) elektrisch zu empfangen und einer Signalaufbereitungsvorrichtung (30) zu übermitteln, wobei die Signalaufbereitungsvorrichtung (30) ausgebildet ist, das empfangene Drahtsignal (42) mit einem vorgegebenen Sollsignal (40) zu vergleichen und bei einer Abweichung des elektrisch empfangenen Drahtsignals (42) vom vorgegebenen Sollsignal (40) das gesendete Drahtsignal (41) zu verändern, wobei die Empfangseinheit (31) der Basisstation (8), die Signalaufbereitungsvorrichtung (30) der Basisstation (8) und die Sendeeinheit (32) der Basisstation (8) zusammen mit dem in Form einer geschlossenen Drahtschleife (2) an die Basisstation (8) angeschlossenen Draht (43) einen Regelkreis (38) bilden.

2. Bodenbearbeitungssystem nach Anspruch 1,
**dadurch gekennzeichnet, dass** die Signalaufbereitungsvorrichtung (30) eingerichtet ist, das gesendete Drahtsignal (41) derart zu verändern, dass das empfangene Drahtsignal (42) dem vorgegebenen Sollsignal (40) angepasst ist.

3. Bodenbearbeitungssystem nach Anspruch 1,
**dadurch gekennzeichnet, dass** das gesendete Drahtsignal (41) und das vorgegebene Sollsignal (40) in der Amplitude (I) und/oder der Signalform unterschiedlich sind.

4. Bodenbearbeitungssystem nach Anspruch 1,
**dadurch gekennzeichnet, dass** die Drahtschleife (2) an ihren Anschlussenden (3, 4) mit der Sendeeinheit (32) elektrisch verbunden ist.

5. Bodenbearbeitungssystem nach Anspruch 4,
**dadurch gekennzeichnet, dass** die Drahtschleife (2) an ihren Anschlussenden (3, 4) mit der Empfangseinheit (31) elektrisch verbunden ist.

6. Bodenbearbeitungssystem nach Anspruch 5,
**dadurch gekennzeichnet, dass** die Empfangseinheit (31) über die Signalaufbereitungsvorrichtung (30) mit der Sendeeinheit (32) verbunden ist.

7. Bodenbearbeitungssystem nach Anspruch 1,
**dadurch gekennzeichnet, dass** die Signalaufbereitungsvorrichtung (30) eingerichtet ist, das gesendete Drahtsignal (41) in seiner Amplitude (I) elektrisch zu verstärken.

8. Bodenbearbeitungssystem nach Anspruch 1,
**dadurch gekennzeichnet, dass** die Signalaufbereitungsvorrichtung (30) eingerichtet ist, das gesendete Drahtsignal (41) in seiner Signalform zu verändern.

9. Bodenbearbeitungssystem nach Anspruch 1,
**dadurch gekennzeichnet, dass** die Basisstation (8) als Ladestation (L) für einen Akku (28) des Bodenbearbeitungsgerätes (1.1, 1.2) ausgebildet ist.

10. Bodenbearbeitungssystem nach Anspruch 1,
**dadurch gekennzeichnet, dass** das Bodenbearbeitungsgerät (1.1, 1.2) ein selbstfahrender Rasenmäher (10) ist.

## Claims

1. Ground working system consisting of at least one self-propelled ground working implement (1.1, 1.2), wherein the ground working implement (1.1, 1.2) has a drive (11) and a control unit (23), and having a working area (A) bounded by a wire (43), wherein the ground working implement (1.1, 1.2) is designed to travel a route (W) determined by the control unit (23) in the working area (A), and having a base station (8) with a transmitting unit (32) electrically connected to the wire (43) and configured to transmit a wire signal (41) on the wire (43), wherein the electromagnetic field of the wire signal (41) induces a receive signal in a receiver coil (6, 7) of the ground working implement (1.1, 1.2) and the control unit (23) is configured to process the induced receive signal in the control unit (23), **characterised in that** the base station (8) has a receiver unit (31) and the receiver unit (31) of the base station (8) is configured to electrically receive the wire signal (41) transmitted on the wire (43) and to transfer it to a signal processing device (30), wherein the signal processing device (30) is designed to compare the received wire signal (42) to a predefined set signal (40) and to change the transmitted wire signal (41) if the electrically received wire signal (42) deviates from the predefined set signal (40), wherein the receiver unit (31) of the base station (8), the signal processing device (30) of the base station (8) and the transmitting unit (32) of the base station (8) form a control circuit (38) together with the wire (43), which is connected to the base station (8) in the form of a closed wire loop (2).

2. Ground working system according to claim 1,
**characterised in that** the signal processing device (30) is configured to change the transmitted wire signal (41) in such a way that the received wire signal (42) matches the predefined set signal (40).

3. Ground working system according to claim 1,
**characterised in that** the transmitted wire signal (41) and the predefined set signal (40) are different in their amplitude (I) and/or their wave form.

4. Ground working system according to claim 1,
**characterised in that** the wire loop (2) is electrically connected to the transmitting unit (32) at its connecting ends (3, 4).

5. Ground working system according to claim 4,
**characterised in that** the wire loop (2) is electrically connected to the receiver unit (31) at its connecting ends (3, 4).

6. Ground working system according to claim 5,
**characterised in that** the receiver unit (31) is connected to the transmitting unit (32) via the signal processing device (30).

7. Ground working system according to claim 1,
**characterised in that** the signal processing device (30) is configured to boost the transmitted wire signal (41) electrically in its amplitude (I).

8. Ground working system according to claim 1,
**characterised in that** the signal processing device (30) is configured to change the transmitted wire signal (41) in its wave form.

9. Ground working system according to claim 1,
**characterised in that** the base station (8) is designed as a charging station (L) for a battery of the ground working implement (1.1, 1.2).

10. Ground working system according to claim 1,
**characterised in that** the ground working implement (1.1, 1.2) is a self-propelled lawnmower (10).

## Revendications

1. Système de traitement de sol composé d'au moins un appareil de traitement de sol autonome (1.1, 1.2), dans lequel l'appareil de traitement de sol (1.1, 1.2) comporte un entraînement (11) et une unité de commande (23), et avec une zone de travail (A) limitée par un fil (43), dans lequel l'appareil de traitement de sol (1.1, 1.2) est installé pour parcourir dans la zone de travail (A) une trajectoire (W) déterminée par l'unité de commande (23), et avec une station de base (8) avec une unité d'émission (32) raccordée électriquement au fil (43), qui est installée pour émettre un signal de fil (41) sur le fil (43), dans lequel le champ électromagnétique du signal de fil (41) induit dans une bobine de réception (6, 7) de l'appareil de traitement de sol (1.1, 1.2) un signal de réception, et l'unité de commande (23) est installée pour traiter le signal de réception induit dans l'unité de commande (23),
**caractérisé en ce que** la station de base (8) comporte une unité de réception (31) et l'unité de réception (31) de la station de base (8) est installée pour recevoir électriquement le signal de fil (41) émis sur le fil (43) et le transmettre à un dispositif de traitement de signaux (30), dans lequel le dispositif de traitement de signaux (30) est formé pour comparer le signal de fil (42) reçu à un signal de consigne prédéfini (40) et, en cas d'écart du signal de fil (42) reçu électriquement par rapport au signal de consigne prédéfini (40), pour modifier le signal de fil (41) émis, dans lequel l'unité de réception (31) de la station de base (8), le dispositif de traitement de signaux (30) de la station de base (8) et l'unité d'émission (32) de la station de base (8) forment conjointement avec le fil (43) raccordé sous la forme d'une boucle de fil fermée (2) à la station de base (8) un circuit de régulation (38).

2. Système de traitement de sol selon la revendication 1,
**caractérisé en ce que** le dispositif de traitement de signaux (30) est installé pour modifier le signal de fil (41) émis de telle sorte que le signal de fil reçu (42) soit adapté au signal de consigne prédéfini (40).

3. Système de traitement de sol selon la revendication 1,
**caractérisé en ce que** le signal de fil (41) émis et le signal de consigne prédéfini (40) sont différents en amplitude (I) et/ou en forme de signal.

4. Système de traitement de sol selon la revendication 1,
**caractérisé en ce que** la boucle de fil (2) est reliée électriquement, à ses extrémités de raccordement (3, 4), à l'unité d'émission (32).

5. Système de traitement de sol selon la revendication 4,
**caractérisé en ce que** la boucle de fil (2) est reliée électriquement, à ses extrémités de raccordement (3, 4), à l'unité de réception (31).

6. Système de traitement de sol selon la revendication 5,
**caractérisé en ce que** l'unité de réception (31) est reliée par le dispositif de traitement de signaux (30) à l'unité de réception (32).

7. Système de traitement de sol selon la revendication 1,
**caractérisé en ce que** le dispositif de traitement de signaux (30) est installé pour renforcer électriquement en amplitude (I) le signal de fil (41) émis.

8. Système de traitement de sol selon la revendication 1,
**caractérisé en ce que** le dispositif de traitement de signaux (30) est installé pour modifier en forme de signal le signal de fil (41) émis.

9. Système de traitement de sol selon la revendication 1,
**caractérisé en ce que** la station de base (8) est formée comme station de charge (L) pour un accumulateur (28) de l'appareil de traitement de sol (1.1, 1.2).

10. Système de traitement de sol selon la revendication 1,
**caractérisé en ce que** l'appareil de traitement de sol (1.1, 1.2) est une tondeuse autonome (10).
